# EUROPEAN PATENT SPECIFICATION

(11) **EP 1 336 736 B1**
(45) Date of publication and mention of the grant of the patent: **21.06.2006**
(21) Application number: 03100217.3
(22) Date of filing: 03.02.2003
(51) Int. Cl.: F02B 29/04, F28F 9/02, F28F 27/02, F28D 1/053

(54) **Intercooler for an engine**
Ladeluftkühler für eine Brennkraftmaschine
Refroidisseur pour un moteur

(30) Priority: 14.02.2002 GB 0203485
(43) Date of publication of application: 20.08.2003
(73) Proprietor: Delphi Technologies, Inc., Troy, MI 48007 (US)
(72) Inventor: Ritz, Tom, 8471 Eischen (LU); Venerucci, David, 54400, Longwy (FR)
(74) Representative: Beissel, Jean

(56) References cited:
- EP-A- 0 287 449
- DE-A1- 19 853 455
- US-A- 5 632 256
- US-A- 5 915 464
- PATENT ABSTRACTS OF JAPAN vol. 007, no. 116 (M-216), 20 May 1983 (1983-05-20) & JP 58 035397 A (SAKUSHIYON GAS KIKAN SEISAKUSHO:KK; others: 01), 2 March 1983 (1983-03-02)

## Description

### FIELD OF THE INVENTION

The present invention generally relates to an intercooler for an engine.

### BACKGROUND OF THE INVENTION

Intercoolers are conventionally used in turbocharged or supercharged engines to cool down the charge air before it enters the combustion chambers. An intercooler is thus generally inserted between the outlet of the turbocharger, or supercharger respectively, and the intake manifold.

Depending on the engine operating conditions, it may be desirable to bypass the intercooler, to take advantage of the hot temperature of the compressed intake air exiting the turbocharger.

It is known to bypass an intercooler by providing a bypass duct that is connected upstream and downstream of the intercooler. A bypass valve arranged in the bypass duct allows to control the flow rate of intake air that bypasses the intercooler. Such an arrangement requiring a specific bypass duct and an associated bypass valve is complicated and requires an expensive design for the bypass duct. In engines equipped with an EGR (Exhaust Gas Recirculation) system, it is also known to provide a so-called MRVR (manifold vacuum regulating valve) at the exit of the intercooler, to control the pressure downstream of the intercooler and thereby influence the rate of EGR in the engine. The MVRV is also used during engine shut-off to hinder the flow of air so as to strangle the engine. To meet all these functions, the bypass duct needs to merge in the intake duct downstream of the MVRV. This complicates the packaging of the bypass duct.

US 5,632,256 discloses an intercooler having a first tank part with an inlet and an outlet chamber, a second tank part, and a heat exchanger part extending between the first and second tank parts. The heat exchanger part comprises a plurality tubes for cooling the charge air flowing therethrough, each of the inlet and outlet chambers being associated with a respective number of tubes. The second tank part is designed in such a way as to direct air coming from the tubes associated with the inlet chamber into the tubes associated with the outlet chamber, so that the charge air follows a U-shaped flow path within the intercooler. The first tank part is provided with an adjustable flap, which in its closed position separates the inlet chamber from the outlet chamber. When this flap is moved into its open position, charge air entering the inlet chamber can directly flow to the outlet chamber, so as to bypass the heat exchanger part of the intercooler. In order to be capable of completely closing the flow of charge air through the heat exchanger, the second tank part is also provided with such an adjustable flap.

Using the intercooler of US 5,632,256 allows avoid the complex, space consuming conventional arrangement consisting of a separate bypass duct and associated switching means. However, it requires a substantial modification of the intercooler structure as well as flap actuating means about the first and second tank parts.

### OBJECT OF THE INVENTION

The object of the present invention is to provide an alternative, more compact intercooler for an engine. This object is achieved by an intercooler as claimed in claim 1.

### SUMMARY OF THE INVENTION

An intercooler according to the present invention comprises a first tank part with an inlet area and an outlet area, and a second tank part. The intercooler further includes a heat exchanger part comprising a plurality of ducts that communicate at one end with the first tank part, and at the other end with the second tank part; the inlet and outlet areas of the first tank part each being associated with a respective number of ducts of the heat exchanger part.

According to an important aspect of the invention, the first tank part further includes a bypass valve operable to direct a flow of air from the inlet area to the outlet area without flowing through the heat exchanger part and a flow control valve for controlling the flow rate of air through the heat exchanger part.

Hence, the present intercooler has bypass and flow control valves integrated in the first tank part, so that there is no need to provide a flap in the second tank part nor actuating means for actuating such a flap. This allows for a more compact arrangement of the intercooler in the engine compartment than that of the intercooler of US 5,632,256. The bypass and flow control valves allow to operate the intercooler in a cooling mode, wherein the hot intake air - coming from the compressor outlet of the turbocharger- circulates through the heat exchanger part and is cooled. The bypass and flow control valves also allow operation of the intercooler in a bypass mode, wherein hot intake air entering the inlet area is directed to the outlet area without flowing through the heat exchanger part, so that it is not cooled in the intercooler. Hence, hot intake air is admitted in the engine cylinders, which can be of interest for heating-up the engine more quickly. Furthermore, bypassing the intercooler results in a temperature increase of the exhaust gases, which is interesting for Diesel Particulate Filter regeneration, as the hot exhaust gas temperature is required to bum the particulates collected in the filter via post-injection. Depending on the design of the bypass and flow control valves, it is also possible to only partially bypass the heat exchanger, so that a temperature controlled air is delivered by the outlet area.

According to a first design type, the intercooler is configured so that the intake air makes two passages through the heat exchanger part, thereby following a U-shaped flow path. The second tank part is configured to divert the air flow coming from the ducts associated with the inlet area to the ducts associated with the outlet area.

In a first embodiment of this first design type, a partition wall divides the inlet area into an upstream chamber with an inlet duct and a downstream chamber in communication with the associated ducts of the heat exchanger part. The bypass valve is arranged so that, in its open position, the upstream chamber communicates with the outlet area; and in its closed position all air flows through the heat exchanger part. The flow control valve is arranged in the partition wall.

In a second embodiment, a partition wall divides the outlet area in a downstream chamber with an outlet duct and an upstream chamber in communication with the associated ducts of the heat exchanger part. The bypass valve is arranged so that, in its open position, the upstream chamber communicates with the inlet area. The flow control valve is arranged in the partition wall.

Both these embodiments thus allow a compact arrangement of the intercooler in the engine compartment, since the valves are integrated in a single tank part, and no actuating means are required in the vicinity of the second tank part. In addition, this allows for a very basic design of the second tank part, which only serves as flow diverting area so that the intake air follows a U-shaped flow path in the heat exchanger part.

According to a second design type, the intercooler is designed so that intake air makes four passages through the heat exchanger part. Therefore, the first tank part preferably further includes a flow diverting area associated with a first number of ducts and a second number of ducts of the heat exchanger part, so that air arriving from the first number of ducts is diverted to the second number of ducts. The second tank part comprises a first flow diverting area for directing an air flow arriving from the ducts associated with the inlet area into the first number of ducts; and a second flow diverting area for directing an air flow arriving from the second number of ducts to the ducts associated with the outlet area.

According to a first embodiment of the second design type, the bypass valve is operable to allow an air flow to pass from the inlet area to the outlet area without flowing through the heat exchanger part. The flow control valve is arranged in the flow diverting area in the first tank part and is operable to control the rate flow of air through the heat exchanger part. A first partition wall divides the flow diverting area in the first tank part into an upstream chamber in communication with the first number of ducts and a downstream chamber in communication with the second number of ducts. The flow control valve is arranged in this first partition wall.

This is an even more compact design of the first tank part, since the flow control valve is not anymore arranged in the inlet or outlet area with the bypass valve, but in the separate flow diverting area of the first tank part. Furthermore, this embodiment allows to strangle the engine during shut-off, by closing both the bypass valve and flow control valve.

In a second embodiment, the bypass valve is arranged in a second partition wall separating the inlet area from the outlet area, this second partition wall being aligned with the first partition wall. Hence, the bypass and flow control valves are arranged in a same wall portion, which facilitates the actuation of the valves and the design of the actuation means. In this connection, the bypass valve and the flow control valve preferably are flap valves which are mounted on a same actuating shaft, both flap valves being arranged at 90° with respect to each other on the shaft. This thus allows controlling the bypass and flow control valves by means of a single actuating shaft, therefore requiring only one actuator that can be installed outside the intercooler. It will be understood that due to the offset between the flaps, when the bypass valve is closed the flow control valve is open, and vice versa.

In this second embodiment, the counterpart of the simple bypass and flow control means is that engine strangling is not possible. They can thus be used in case strangling by the intercooler is not required.

Actuation of the bypass valve, flow control valve, or the moveable wall part is preferably done my means of actuators mounted to the external walls of the first tank part. The actuators may be provided with position sensors to allow closed loop control.

The intercooler may be provided with temperature control means for actuating the bypass and flow control means. Such a temperature control means will thus control the different flaps in such a way that the air flow exiting the intercooler has a temperature corresponding to a desired temperature.

In order to strangle the engine during shutt-off, the bypass and flow control valves should preferably be designed so as to tightly seal in their closed position.

### BRIEF DESCRIPTION OF THE DRAWINGS

The present invention will now be described, by way of example, with reference to the accompanying drawings, in which:
FIG.1: is a schematic exploded view of an intercooler according to the invention;
FIG.2: is a perspective view -from below- of a first embodiment of a first tank part, with the bypass valve closed and the flow control valve open;
FIG.3: is a perspective view showing the inner structure of the first tank part of Fig.2 assembled to the heat exchanger part, with the bypass valve open and the flow control valve closed;
FIG.4: is a perspective view -from below- of a second embodiment of a first tank part, with the bypass valve closed and the flow control valve open;
FIG.5: is a perspective view showing the inner structure of the first tank part of Fig.4 assembled to the heat exchanger part, with the bypass valve open and the flow control valve closed.

### DETAILED DESCRIPTION OF PREFERRED EMBODIMENTS

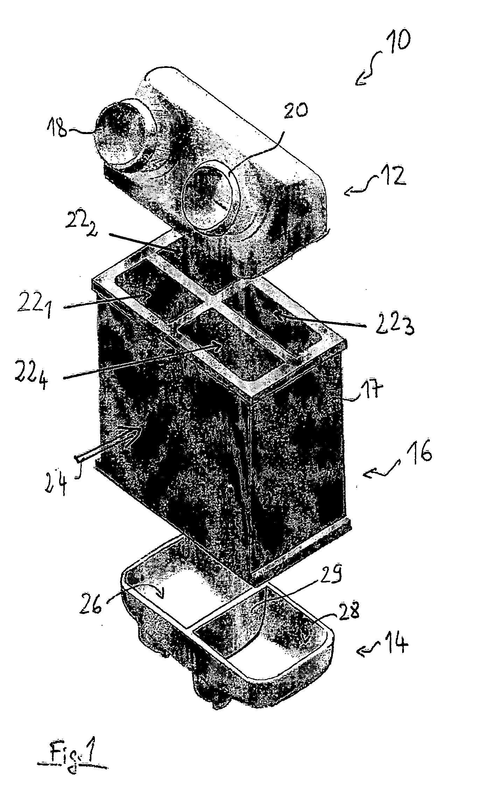

Three embodiments according to a preferred design of the present intercooler will now be described in more detail. As shown in Fig.1, the intercooler 10 comprises a first tank part 12, a second tank part 14 and a heat exchanger part 16. The first tank part 12 has an inlet duct 18 for receiving hot, compressed intake air from a turbocharger compressor outlet and an outlet duct 20 for delivering cooled intake air to an engine intake manifold.

It is to be noted that in the three embodiments described herebelow, intake air to be cooled in the intercooler 10 makes four passages in the heat exchanger part 16. Therefore, the heat exchanger part 16 is shown in the Figures as having a housing 17 divided into four sections 22₁...22₄. However, it is to be noted that, although not shown, each of these sections 22₁...22₄ comprises a plurality of longitudinally arranged tubes that allow transferring intake air between the first and second tank parts 12 and 14. In addition, the heat exchanger part 16 is designed in such a way that air can flow therethrough e.g. in the direction of arrow 24, and thus between the ducts, so as to cool the intake air circulating through the ducts in each section 22₁.

The second tank part 14 is designed so as to comprise two flow diverting areas 26 and 28. From Fig.1 it can clearly be seen that, due to the configuration of the second tank part 14, an air flow arriving in the second tank part 14 from the ducts of the first section 22₁ will be diverted into the ducts of the second section 22₂. Moreover, an air flow arriving from the ducts of the third section 22₃ will be diverted into the ducts of the fourth section 22₄. This is simply done by providing in the second tank part 14 a fixed partition wall 29 dividing it into the two areas 26 and 28, the area 26 being in communication with the ducts of the first 22₁ and second 22₂ sections and the area 28 being in communication with the ducts of the third 22₃ and fourth 22₄ sections.

It will be appreciated that the present intercooler 10 includes a first tank part 12 that is provided with bypass and flow control means operable to bypass the heat exchanger part and for controlling the flow rate of air through the heat exchanger part. As will be explained, this allows operating the intercooler in a cooling mode, wherein the intake air entering the inlet area flows through the heat exchanger part 16 to be cooled; and in a bypass mode, wherein the intake air is directed from the inlet area to the outlet area without circulating through the heat exchanger part 16.

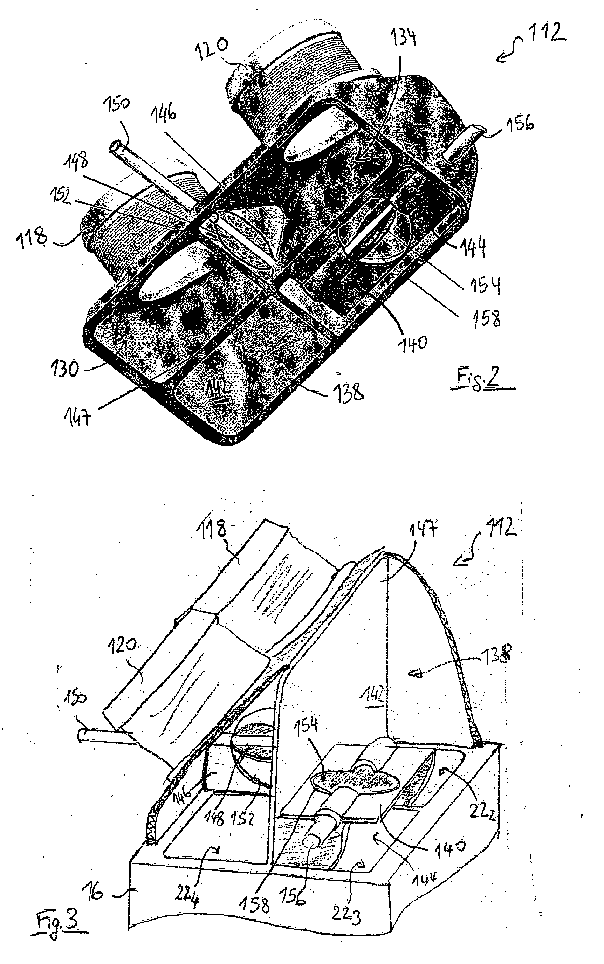

The three different embodiments of the first tank part 12 will now be described in detail with respect to Figures 2 to 5.

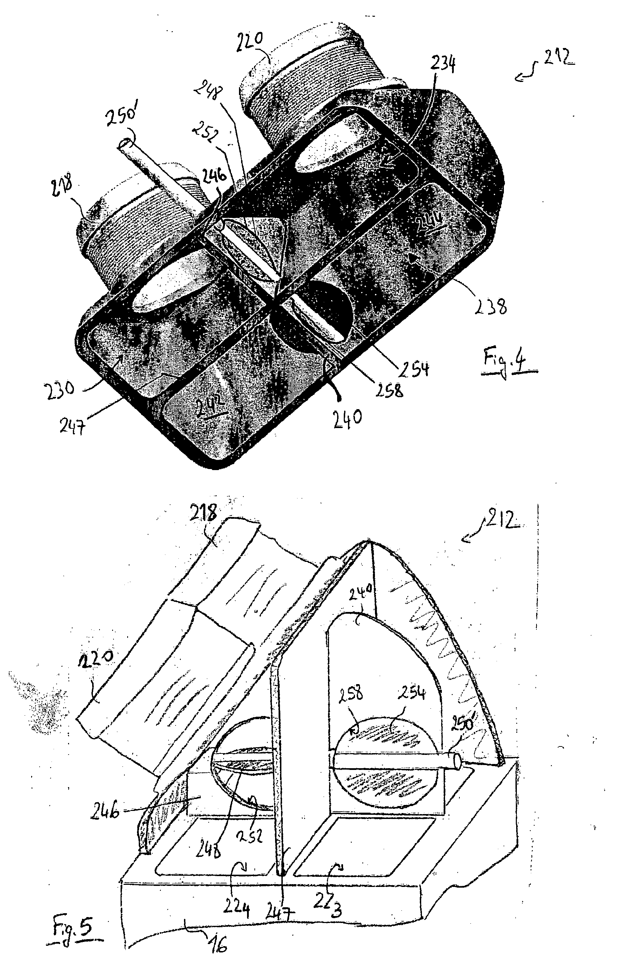

Figures 2 and 3 show a first embodiment of a first tank part 112. It comprises an inlet area 130 with an inlet duct 118 and an outlet area 134 with an outlet duct 120. It will be understood that, when this first tank part 112 is mounted on the heat exchanger part 16 in the way shown in Fig.1, the inlet area 130 is in communication with the ducts of the first section 22₁ and the outlet area 134 is in communication with the ducts of the fourth section 22₄. The first tank part 112 further includes a flow diverting area 138 that is associated with the ducts of the second 22₂ and third 22₃ sections of the heat exchanger part 16.

The flow diverting area 138 is divided by a horizontal, first partition wall 140 into an upstream chamber 142 in communication with the ducts of the second section 22₂ and a downstream chamber 144 in communication with the ducts of the third section 22₃. The inlet area 130 and outlet area 134 are separated by a second partition wall 146. A central longitudinal wall 147 separates the inlet and outlet areas 130, 134 from the flow diverting area 138.

It will be appreciated that the bypass and flow control means provided in the first tank part 112 comprise a bypass valve arranged in the second partition wall 146 and a flow-control valve arranged in the first partition wall 140. The bypass valve is preferably in the form of a circular flap valve 148 mounted on a shaft 150 and operable to either close or open a circular opening 152 in the second partition wall 146, to allow intake air to directly flow from the inlet area 130 to the outlet area 134.

The flow control valve is preferably in the form of a circular flap valve 154 mounted on a shaft 156 and operable to either close or open a circular opening 158 in the first partition wall 140, so as to control the flow rate of intake air through the heat exchanger part 16.

In Fig.2, the bypass valve is closed and the flow control valve is open, so that intake air entering the inlet area 130 flows through the ducts of the first, second, third and fourth section 22₁ ... 22₄ to the outlet area 134. By flowing through the ducts of the different sections, hot intake air is cooled by the ambient air traversing the heat exchanger part 16 in the direction of arrow 24 (Fig.1), so that cooled intake air exists the intercooler 10.

In Fig.3, the bypass valve is open and the flow control valve is closed, so that all intake air directly flows from the inlet area 130 to the outlet area 134 without being cooled in the heat exchanger part 16.

It is to be noted that the flow control valve has a function equivalent to the so-called MVRV (manifold vacuum regulating valve), and thus allows to block the flow through the intercooler 10 during engine shut-off. Hence, such an implementation does not require a special MVRV housing at the exit of the intercooler, and packaging is thus significantly smaller. In addition, the integration of both valves in the first tank part is favorable in terms of durability since the valves are chassis mounted.

Actuation of the flaps 154 and 148 is advantageously carried out by means of actuators (not shown) coupled to the shafts 150 and 156 and mounted to outside walls of the first tank part 112. The actuators may be provided with position sensors to allow closed loop control.

To efficiently strangle the engine during shut-off, the bypass and flow control valves should preferably be designed so as to provide a tight seal in their closed position.

A second embodiment of the first tank part 212 is shown in Figures 4 and 5. The first tank part 212 comprises an inlet area 230 with an inlet duct 218 and an outlet area 234 with an outlet duct 220. When this first tank part 212 is mounted on the heat exchanger part 16 in the way shown in Fig.1, the inlet area 230 is in communication with the ducts of the first section 22₁ and the outlet area 234 is in communication with the ducts of the fourth section 22₄. The first tank part 212 further includes a flow diverting area 238 that is associated with the ducts of the second 22₂ and third 22₃ sections of the heat exchanger part 16.

The flow diverting area 238 is divided by a first partition wall 240 into an upstream chamber 242 in communication with the ducts of the second section 22₂ and a downstream chamber 244 in communication with the ducts of the third section 22₃. The inlet area 230 and outlet area 234 are separated by a second partition wall 246. A central longitudinal wall 247 separates the inlet and outlet areas 230, 234 from the flow diverting area 238.

The bypass valve is preferably in the form of a circular flap valve 248 mounted on a shaft 250' and operable to either close or open a circular opening 252 in the second partition wall 246, to allow intake air to directly flow from the inlet area 230 to the outlet area 234.

The flow control valve is preferably in the form of a circular flap valve 254 operable to either close or open a circular opening 258 in the first partition wall 240, so as to control the flow rate of intake air through the heat exchanger part 16.

As can be seen, the two partition walls 240 and 246 are aligned, which allows mounting the flap 254 of the flow control valve on the shaft 250' on which the flap 248 of the bypass valve is mounted. The two flaps 248 and 254 are arranged at 90° with regard to each other, so that when the bypass flap 252 is in the closed position, the flow-control flap 254 is open, and vice versa.

This implementation thus allows controlling both flaps 252 and 254 with a single actuating shaft, and thus requires only one actuator.

Regarding the first and second embodiments of Figs.2 to 5, it will be noted that if a precise actuation is required, the valve openings may each be provided with a short duct and the respective flaps mounted therein. Such a short duct is designed in such a way that the flap valve mounted therein follows a spherical bore, thereby allowing a progressive control.

It remains to be noted that in the presented embodiments, it is possible to control the bypass and flow control means in such a way as to completely, partially, or not at all cool the hot compressed air entering the inlet area.

Therefore, the intercooler may include a temperature control means that is capable of operating the bypass and flow control means to deliver an air flow of desired temperature. The temperature control means may operate in closed loop based on a temperature sensor or a flap/actuator position sensor.

The present intercooler, in its various embodiments, also proves advantageous in that:
- it is less subject to leakage than the conventional structure using a separate bypass duct and an MVRV,
- it has an improved vibration resistance since the intercooler is generally chassis mounted;
- the integration of both bypass and flow control valves in the first tank part simplifies packaging and leads to a gain of space in the engine compartment;
- it is a cost efficient solution.

## Claims

1. An intercooler for an engine comprising:
a first tank part (12, 112, 212) with an inlet area (130, 230) and an outlet area (134, 234);
a second tank part (14);
a heat exchanger part (16) comprising a number of ducts (22₁...122₄) that communicate at one end with said first tank part (12, 112, 212) and at the other end with said second tank part (14), said inlet and outlet areas (130, 230, 330; 134, 234) each being associated with a respective number of ducts (22₁; 22₄) of said heat exchanger part (16);
a bypass valve in said first tank part (12, 112, 212) operable to direct a flow of air from said inlet area (130, 230) to said outlet area (134, 234) without flowing through said heat exchanger part (16)
**characterized by**
a separate flow control valve in said first tank part (12, 112, 212) operable to control the flow rate through said heat exchanger part (16).

2. The intercooler according to claim 1, **characterised in that**
a partition wall divides said inlet area into an upstream chamber in communication with an inlet duct and a downstream chamber in communication with said associated ducts of said heat exchanger part;
said bypass valve is arranged so that, in its open position, said upstream chamber communicates with said outlet area; and
said flow control valve is arranged in said partition wall.

3. The intercooler according to claim 1, **characterised in that**
a partition wall divides said outlet area into a downstream chamber in communication with an outlet duct and an upstream chamber in communication with said associated ducts of said heat exchanger;
said bypass valve is arranged so that, in its open position, said upstream chamber communicates with said inlet area; and
said flow control valve is arranged in said partition wall.

4. The intercooler according to claim 1, **characterised in that**
said first tank part (112, 212) further includes a flow diverting area (138, 238) associated with a first number of ducts (22₂) and a second number of ducts (22₃) of said heat exchanger part (16), so that air arriving from said first number of ducts (22₂) is diverted to said second number of ducts (22₃); and
said second tank part (14) comprises a first flow diverting area (26) for directing an air flow arriving from the ducts (22₁) associated with said inlet area (130, 230) into said first number of ducts (22₂), and a second flow diverting area (28) for directing an air flow arriving from said second number of ducts (22₃) to said ducts (22₄) associated with said outlet area (134, 234).

5. The intercooler according to claim 4, **characterised in that**
said bypass valve is operable to allow an air flow to flow from said inlet area (130, 230) to said outlet area (134, 234) without passing through said heat exchanger part (16); and
said flow control valve is arranged in said flow diverting area (138, 238) in said first tank part (112, 212) and operable to control the flow rate through said heat exchanger part (16).

6. The intercooler according to claim 4 and 5, **characterised in that**
a first partition wall (140, 240) divides said flow diverting area (138, 238) in said first tank part (112, 212) into an upstream chamber (142, 242) in communication with said first number of ducts (22₂) and a downstream chamber (144, 244) in communication with said second number of ducts (22₃); and said flow control valve is arranged in said partition wall (140, 240).

7. The intercooler according to claim 6, **characterised in that**
a second partition wall (246) separates said inlet area (230) from said outlet area (234);
said bypass valve is arranged in said second partition wall (246); and
said second partition wall (246) is aligned with said first partition wall (240).

8. The intercooler according to claim 7, **characterised in that**
said bypass valve and said flow control valve are flap valves (248, 254) which are mounted on a same actuating shaft (250'), both flap valves (248, 254) being arranged at right angle with respect to each other.

9. The intercooler according to any one of claims 4 to 8, **characterised in that**
said bypass valve and flow control valve are each a flap valve associated with a valve opening; and
a short duct is mounted in each valve opening and the respective flap valve is mounted in this short duct, which is provided with a spherical bore.

10. The intercooler according to any one of claims 4 to 9, **characterised in that** said bypass valve and flow control valve are designed in such a way as to provide a tight sealing in their closed position.

11. The intercooler according to any one of the preceding claims, **characterised by** temperature control means for actuating said bypass and flow control valves to provide a desired temperature of the air flow exiting said outlet chamber (134, 234).

12. The intercooler according to any one of claims 4 to 11, **characterised in that** said an inlet duct (118,218) opens into said inlet area (130, 230) and an outlet duct (120, 220) opens into said outlet area (134,234).

## Patentansprüche

1. Ladeluftkühler für eine Brennkraftmaschine, umfassend:
einen ersten Behälterteil (12, 112, 212) mit einem Einlassbereich (130, 230) und einem Auslassbereich (134, 234);
einen zweiten Behälterteil (14);
einen Wärmetauscherteil (16), der eine Anzahl von Kanälen (22₁ 22₄) umfasst, die an einem Ende mit dem ersten Behälterteil (12, 112, 212) und am anderen Ende mit dem zweiten Behälterteil (14) in Verbindung stehen, wobei die Einlass- und Auslassbereiche (130, 230, 330, 134, 234) jeweils einer jeweiligen Anzahl von Kanälen (22₁; 22₄) des Wärmetauscherteils (16) zugeordnet sind;
ein Bypass-Ventil im ersten Behälterteil (12, 112, 212), das so betrieben werden kann, dass es einen Luftstrom vom Einlassbereich (130, 230) zum Auslassbereich (134, 234) leitet, ohne dass er durch den Wärmetauscherteil (16) fließt;
**gekennzeichnet durch**
ein separates Stromregelventil im ersten Behälterteil (12, 112, 212), das so betrieben werden kann, dass es den Durchfluss **durch** den Wärmetauscherteil (16) regelt.

2. Ladeluftkühler nach Anspruch 1, **dadurch gekennzeichnet, dass**
eine Trennwand den Einlassbereich in eine stromaufwärtige Kammer, die mit einem Einlasskanal in Verbindung steht, und eine stromabwärtige Kammer unterteilt, die mit den zugeordneten Kanälen des Wärmetauscherteils in Verbindung steht;
wobei das Bypass-Ventil so angeordnet ist, dass bei seiner geöffneten Stellung die stromaufwärtige Kammer mit dem Auslassbereich in Verbindung steht; und
wobei das Stromregelventil in der Trennwand angeordnet ist.

3. Ladeluftkühler nach Anspruch 1, **dadurch gekennzeichnet, dass**
eine Trennwand den Auslassbereich in eine stromabwärtige Kammer, die mit einem Auslasskanal in Verbindung steht, und eine stromaufwärtige Kammer unterteilt, die mit den zugeordneten Kanälen des Wärmetauschers in Verbindung steht;
wobei das Bypass-Ventil so angeordnet ist, dass bei seiner geöffneten Stellung die stromaufwärtige Kammer mit dem Einlassbereich in Verbindung steht; und
wobei das Stromregelventil in der Trennwand angeordnet ist

4. Ladeluftkühler nach Anspruch 1, **dadurch gekennzeichnet, dass**
der erste Behälterteil (112, 212) ferner einen Stromumlenkbereich (138, 238) umfasst, der einer ersten Anzahl von Kanälen (22₂) und einer zweiten Anzahl von Kanälen (22₃) des Wärmetauscherteils (16) zugeordnet ist, so dass Luft, die von der ersten Anzahl von Kanälen (22₂) ankommt, zu der zweiten Anzahl von Kanälen (22₃) umgelenkt wird; und
der zweite Behälterteil (14) einen ersten Stromumlenkbereich (26) umfasst, um einen Luftstrom, der von den Kanälen (22₁) ankommt, die dem Einlassbereich (130, 230) zugeordnet sind, in die erste Anzahl von Kanälen (22₂) zu leiten; und einen zweiten Stromumlenkbereich (28) umfasst, um einen Luftstrom, der von der zweiten Anzahl von Kanälen (22₃) ankommt, zu den Kanälen (22₄) zu leiten, die dem Auslassbereich (134, 234) zugeordnet sind.

5. **Ladeluftkühler nach Anspruch 4, dadurch gekennzeichnet, dass**
das Bypass-Ventil so betrieben werden kann, dass es einen Luftstrom vom Einlassbereich (130, 230) zum Auslassbereich (134, 234) fließen lässt, ohne dass er durch den Wärmetauscherteil (16) fließt; und
das Stromregelventil im Stromumlenkbereich (138, 238) im ersten Behälterteil (112, 212) angeordnet ist und so betrieben werden kann, dass es den Durchfluss durch den Wärmetauscherteil (16) regelt.

6. Ladeluftkühler nach Anspruch 4 und 5, **dadurch gekennzeichnet, dass**
eine erste Trennwand (140, 240) den Stromumlenkbereich (138, 238) im ersten Behälterteil (112, 212) in eine stromaufwärtige Kammer (142, 242), die mit der ersten Anzahl von Kanälen (22₂) in Verbindung steht, und eine stromabwärtige Kammer (144, 244) unterteilt, die mit der zweiten Anzahl von Kanälen (22₃) in Verbindung steht; und
das Stromregelventil in der Trennwand (140, 240) angeordnet ist

7. Ladeluftkühler nach Anspruch 6, **dadurch gekennzeichnet, dass**
eine zweite Trennwand (246) den Einlassbereich (230) vom Auslassbereich (234) trennt;
das Bypass-Ventil in der zweiten Trennwand (246) angeordnet ist; und
die zweite Trennwand (246) auf die erste Trennwand (240) ausgerichtet ist

8. Ladeluftkühler nach Anspruch 7, **dadurch gekennzeichnet, dass**
das Bypass-Ventil und das Stromregelventil Klappenventile (248, 254) sind, die an einer gleichen Betätigungswelle (250') angebracht sind,
wobei beide Klappenventile (248, 254) rechtwinklig zueinander angeordnet sind.

9. Ladeluftkühler nach irgendeinem der Ansprüche 4 bis 8, **dadurch gekennzeichnet, dass**
das Bypass-Ventil und das Stromregelventil jeweils ein Klappenventil sind, das einer Ventilöffnung zugeordnet ist; und
ein kurzer Kanal in jeder Ventilöffnung angebracht ist und das jeweilige Klappenventil in diesem kurzen Kanal angebracht ist, der mit einer Kugelbohrung versehen ist

10. Ladeluftkühler nach irgendeinem der Ansprüche 4 bis 9, **dadurch gekennzeichnet, dass** das Bypass-Ventil und das Stromregelventil so konstruiert sind, dass sie in ihrer geschlossenen Stellung einen dichten Verschluss bilden.

11. Ladeluftkühler nach irgendeinem der vorangehenden Ansprüche, **gekennzeichnet durch** Temperaturreglermittel zur Betätigung des Bypass-Ventils und des Stromregelventils, um eine Solltemperatur des Luftstroms bereitzustellen, der aus der Auslasskammer (134, 234) austritt

12. Ladeluftkühler nach irgendeinem der Ansprüche 4 bis 11, **dadurch gekennzeichnet, dass** ein Einlasskanal (118, 218) in den Einlassbereich (130, 230) öffnet und ein Auslasskanal (120, 220) in den Auslassbereich (134, 234) öffnet

## Revendications

1. Refroidisseur intermédiaire pour un moteur, qui comprend:
une première partie de cuve (12, 112, 212) dotée d'une zone d'entrée (130, 230) et d'une zone de sortie (134, 324),
une deuxième partie de cuve (14),
une partie (16) qui forme un échangeur de chaleur et qui comprend un certain nombre de conduits (22₁ 22₄) dont une extrémité communique avec ladite première partie de cuve (12, 112, 212) et l'autre extrémité avec ladite deuxième partie de cuve (14), ladite zone d'entrée et ladite zone de sortie (130, 230; 134, 234) étant chacune associées à un nombre respectif de conduits (22₁ 22₄) de ladite partie (16) qui forme l'échangeur de chaleur,
une vanne de contournement prévue dans ladite première partie de cuve (12, 112, 212) et qui peut être actionnée pour envoyer l'écoulement d'air de ladite zone d'entrée (130, 230) à ladite zone de sortie (134, 234) sans traverser ladite partie (16) qui forme l'échangeur de chaleur,
**caractérisé par**
une vanne séparée de contrôle de débit prévue dans la première partie de cuve (12, 112, 212) et que l'on peut actionner pour contrôler le débit qui traverse ladite partie (16) qui forme l'échangeur de chaleur.

2. Refroidisseur intermédiaire selon la revendication 1, **caractérisé en ce que**
une cloison divise ladite zone d'entrée en une chambre amont qui communique avec un conduit d'entrée et une chambre aval qui communique avec lesdits conduits associés de ladite partie qui forme l'échangeur de chaleur,
ladite vanne de contournement est agencée de telle sorte que lorsqu'elle se trouve en position ouverte, ladite chambre amont communique avec ladite zone de sortie et
ladite vanne de contrôle de débit est agencée dans ladite cloison.

3. Refroidisseur intermédiaire selon la revendication 1, **caractérisé en ce que** :
une cloison divise ladite zone de sortie en une chambre aval qui communique avec un conduit de sortie et une chambre amont qui communique avec lesdits conduits associés dudit échangeur de chaleur,
ladite vanne de contournement est agencée de telle sorte que lorsqu'elle se trouve en position ouverte, ladite chambre amont communique avec ladite zone d'entrée et
ladite vanne de contrôle de débit est agencée dans ladite cloison

4. Refroidisseur intermédiaire selon la revendication 1, **caractérisé en ce que**:
ladite première partie de cuve (112, 212) comprend en outre une zone (138, 238) de déviation d'écoulement associée à un premier nombre de conduits (22₂) et un deuxième nombre de conduits (22₃) de ladite partie (16) qui forme l'échangeur de chaleur de telle sorte que l'air qui provient dudit premier nombre de conduits (22₂) est dévié vers ledit deuxième nombre de conduits (22₃) et
ladite deuxième partie de cuve (14) comprend une première zone (26) de déviation d'écoulement qui envoie l'écoulement d'air qui provient des conduits (221) associés à la dite zone d'entrée (130, 230) dans ledit premier nombre de conduits (22₂) et une deuxième zone (28) de déviation d'écoulement qui envoie l'écoulement d'air qui provient dudit deuxième nombre de conduits (22₃) vers lesdits conduits (22₄) associés à ladite zone de sortie (134, 234)

5. Refroidisseur intermédiaire selon la revendication 4, **caractérisé en ce que**
ladite vanne de contournement peut être actionnée pour permettre à l'air de s'écouler depuis ladite zone d'entrée (130, 230) jusqu'à ladite zone de sortie (134, 234) sans traverser ladite partie (16) qui forme l'échangeur de chaleur et
ladite vanne de contrôle de débit est agencée dans ladite zone (138, 238) de déviation d'écoulement de ladite première partie de cuve (112, 212) et peut être actionnée pour contrôler le débit qui traverse ladite partie (16) qui forme l'échangeur de chaleur

6. Refroidisseur intermédiaire selon les revendications 4 et 5, **caractérisé en ce que :**
une première cloison (140, 240) divise ladite zone (138, 238) de déviation d'écoulement de ladite première partie de cuve (112, 212) en une chambre amont (142, 242) qui communique avec ledit premier nombre de conduits (22₂) et une chambre aval (144, 244) qui communique avec ledit deuxième nombre de conduits (22₃) et
ladite vanne de contrôle de débit est agencée dans ladite cloison (140, 240)

7. Refroidisseur intermédiaire selon la revendication 6, **caractérisé en ce que**
une deuxième cloison (246) sépare ladite zone d'entrée (230) de ladite zone de sortie (234),
ladite vanne de contournement est agencée dans ladite deuxième cloison (246) et
ladite deuxième cloison (246) est alignée sur ladite première cloison (240)

8. Refroidisseur intermédiaire selon la revendication 7, **caractérisé en ce que** :
ladite vanne de contournement et ladite vanne de contrôle de débit sont des vannes à papillon (248, 254) qui sont montées sur un même arbre d'actionnement (250'), les deux papillons (248, 254) étant agencés à angle droit l'un par rapport à l'autre.

9. Refroidisseur intermédiaire selon l'une quelconque des revendications 4 à 8, **caractérisé en ce que**
ladite vanne de contournement et ladite vanne de contrôle de débit sont toutes deux des vannes à papillon associées à une ouverture de vanne et
un court conduit est monté dans chaque ouverture de vanne et la vanne à papillon respective est montée dans ce court conduit qui présente une enveloppe sphérique

10. Refroidisseur intermédiaire selon l'une quelconque des revendications 4 à 9, **caractérisé en ce que** ladite vanne de contournement et ladite vanne de contrôle de débit sont conçues de manière à assurer une fermeture étanche lorsqu'elles sont en position fermée.

11. Refroidisseur intermédiaire selon l'une quelconque des revendications précédentes, **caractérisé par** un moyen de contrôle de température qui actionne ladite vanne de contournement et ladite vanne de contrôle de débit de manière à obtenir la température voulue de l'écoulement d'air qui quitte ladite chambre de sortie (134, 234)

12. Refroidisseur intermédiaire selon l'une quelconque des revendications 4 à 11, **caractérisé en ce que** ledit conduit d'entrée (118, 218) débouche dans ladite zone d'entrée (130, 230) et un conduit de sortie (120, 220) débouche dans ladite zone de sortie (134, 234)
